# EUROPEAN PATENT APPLICATION

(11) **EP 4 851 678 A1**
(43) Date of publication of application: **09.12.2026**
(21) Application number: 25748285.1
(22) Date of filing: 22.01.2025
(51) Int. Cl.: G02B 1/04, C08F 2/44, C08F 20/10, G02C 7/02

(54) **PHOTOCURABLE RESIN COMPOSITION, OPTICAL MOLDED PRODUCT, OPTICAL DEVICE, AND METHOD FOR PRODUCING OPTICAL MOLDED PRODUCT**

(30) Priority: 31.01.2024 JP 2024012816
(71) Applicant: Mitsui Chemicals, Inc., Tokyo 104-0028 (JP)
(72) Inventor: TATENO, Kotaro, Tokyo 104-0028 (JP); MIYAO, Hiroshi, Tokyo 104-0028 (JP); YAMAMOTO, Shingo, Tokyo 104-0028 (JP); NAGATA, Kei, Tokyo 104-0028 (JP)
(74) Representative: Hoffmann Eitle
(86) International application number: PCT/JP2025/001953
(87) International publication number: WO 2025/164477

(57) **Abstract**

Provided is a photocurable resin composition capable of being used for an optical molded body, wherein an absorbance of the photocurable resin composition at a wavelength of 405 nm, which is measured according to a predetermined method, is 0.300 or less.

## Description

### TECHNICAL FIELD

The present invention relates to a photocurable resin composition, an optical molded body, an optical device, and a method for manufacturing an optical molded body.

### BACKGROUND ART

In recent years, from the viewpoint of heat resistance and low birefringence, a thermoplastic resin or an ultraviolet-curable resin composition has been studied for an optical system lens. Among these, a methacrylic resin composition which is a thermoplastic resin has been studied. Examples of the methacrylic resin composition include those described in Patent Document 1 and Patent Document 2.

Patent Document 1 discloses a methacrylic resin composition intended to provide high heat resistance, highly controlled birefringence, high light transmittance in a long optical path, and excellent color tone and transparency, the methacrylic resin composition including a methacrylic resin having at least a structural unit derived from an N-substituted maleimide monomer in a main chain, in which a glass transition temperature is higher than 120°C and 160°C or lower, a melt viscosity under conditions of a shear rate of 1,000 sec⁻¹ at a resin temperature of 270°C is 250 Pa·sec or less, an absolute value of a photoelastic coefficient is 1 × 10⁻¹² Pa⁻¹ or less, and in a solution obtained by dissolving the resin composition at 20 mass/volume% (w/v%) in chloroform, a light transmittance measured under conditions of an optical path length of 100 mm and a wavelength of 470 nm is 94% or more, and a light transmittance measured under conditions of a wavelength of 700 nm is 96% or more.

Patent Document 2 discloses a photocurable composition which is rapidly curable, is free from anaerobic curing, has low viscosity, has little odor, and has excellent storage stability, and that is intended to provide a photocurable composition in which a cured product obtained therefrom is excellent in properties required for lenses, such as colorless transparency, low optical distortion, heat resistance, low water absorption, toughness, and high hardness, a photocurable composition containing a tricyclodecane skeleton di(meth)acrylate (A), a trifunctional or tetrafunctional secondary thiol (B), a cleavage-type photopolymerization initiator (C), and a hindered phenol-based antioxidant (D), in which the photocurable composition does not contain a primary thiol, and a content ratio (weight ratio) of the components (A), (B), (C), and (D) is in the following range.
Component (A)/component (B) = 75/25 to 95/5
Component (C): 2 to 10 parts by weight with respect to 100 parts by weight of the total of components (A) and (B)
Component (D): 0.1 to 1 part by weight with respect to 100 parts by weight of the total of components (A) and (B)

### RELATED DOCUMENT

### PATENT DOCUMENT

Patent Document 1: Japanese Unexamined Patent Publication No. 2019-35015
Patent Document 2: Japanese Unexamined Patent Publication No. 2022-32186

### SUMMARY OF THE INVENTION

### TECHNICAL PROBLEM

The present invention provides a photocurable resin composition capable of reducing surface unevenness of an optical molded body.

### SOLUTION TO PROBLEM

The present inventors conducted a thorough investigation in order to achieve the above-described object. As a result, the present inventors have found that an absorbance of the photocurable resin composition at 405 nm, which is measured under specific conditions, is related to the surface unevenness of the obtained optical molded body. As a result of further intensive studies based on the above-described findings, the present inventors have found that the surface unevenness of the optical molded body can be reduced by using a photocurable resin composition in which the absorbance at 405 nm, which is measured under specific conditions, is 0.300 or less, thereby completing the present invention.
[1] A photocurable resin composition capable of being used for an optical molded body,
   wherein an absorbance A₄₀₅ of the photocurable resin composition at a wavelength of 405 nm, which is measured according to the following <measurement method>, is 0.300 or less.

### <Measurement method>

A sample is prepared by dissolving the photocurable resin composition in isopropanol at a mass ratio of the photocurable resin composition to isopropanol of 7:93, and then the sample is placed in a sample cell having an optical path length of 10 **mm.** When an incident light intensity I₀ at a wavelength of 405 nm is incident on the sample cell, a transmitted light intensity I transmitted through the sample cell is measured, and an absorbance A₄₀₅ at a wavelength of 405 nm is calculated by the following expression (1). (1): ${A}_{405} = - {log}_{10} \left(I/{I}_{0}\right)$

The photocurable resin composition according to [1],
wherein the absorbance A₄₀₅ is 0.010 or more.

The photocurable resin composition according to [1] or [2],
wherein the photocurable resin composition contains a (meth)acrylate monomer.

The photocurable resin composition according to [3],
wherein the (meth)acrylate monomer includes one or two or more selected from the group consisting of a monofunctional (meth)acrylate monomer and a bifunctional or higher functional (meth)acrylate monomer.

The photocurable resin composition according to [3] or [4],
wherein the (meth)acrylate monomer includes a (meth)acrylate monomer having an alicyclic skeleton.

The photocurable resin composition according to [5],
wherein the (meth)acrylate monomer having an alicyclic skeleton has one or two or more skeletons selected from the group consisting of an adamantane skeleton, a norbornane skeleton, and a dicyclopentadiene skeleton.

The photocurable resin composition according to [5] or [6],
wherein a content of the (meth)acrylate monomer having an alicyclic skeleton is 30 parts by mass or more and 100 parts by mass or less in a case where a total content of the (meth)acrylate monomer is defined as 100 parts by mass.

The photocurable resin composition according to any one of [3] to [7],
wherein the (meth)acrylate monomer includes a (meth)acrylate monomer having a linear hydrocarbon skeleton.

The photocurable resin composition according to any one of [1] to [8],
wherein the photocurable resin composition further contains a photopolymerization initiator.

The photocurable resin composition according to [9],
wherein the photopolymerization initiator includes a photoradical polymerization initiator.

The photocurable resin composition according to [9] or [10],
wherein a content of the photopolymerization initiator is 0.10 parts by mass or more and 10 parts by mass or less in a case where a total content of the (meth)acrylate monomer is set to 100 parts by mass.

The photocurable resin composition according to any one of [1] to [11],
wherein the photocurable resin composition further contains an antioxidant.

The photocurable resin composition according to [12],
wherein a content of the antioxidant is 0.010 parts by mass or more and 10 parts by mass or less in a case where a total content of the (meth)acrylate monomer is set to 100 parts by mass.

The photocurable resin composition according to any one of [1] to [13],
wherein the photocurable resin composition further contains a light stabilizer.

The photocurable resin composition according to [14],
wherein a content of the light stabilizer is 0.010 parts by mass or more and 5 parts by mass or less in a case where a total content of the (meth)acrylate monomer is set to 100 parts by mass.

The photocurable resin composition according to any one of [1] to [15],
wherein a content of the (meth)acrylate monomer is 80% by mass or more and less than 100% by mass in a case where a total content of the photocurable resin composition is set to 100% by mass.

The photocurable resin composition according to any one of [1] to [16],
wherein the photocurable resin composition is capable of being used in a casting method.

An optical molded body comprising a cured product of the photocurable resin composition according to any one of [1] to [17].

The optical molded body according to [18],
wherein the optical molded body includes a lens.

The optical molded body according to [19],
wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The optical molded body according to any one of [18] to [20],
wherein a maximum thickness portion is 20.0 mm or less.

The optical molded body according to any one of [18] to [21],
wherein a maximum thickness portion of the optical molded body is 1.0 mm or more.

An optical device comprising the optical molded body according to any one of [18] to [22].

A method of manufacturing an optical molded body, comprising:
a thickening step of increasing a viscosity of a photocurable resin composition by irradiating the photocurable resin composition with light using an irradiation device having a light source peak at a wavelength of 360 nm or more and 410 nm or less; and
a curing step of curing the photocurable resin composition by irradiating the photocurable resin composition with light using the irradiation device having a light source peak at a wavelength of 360 nm or more and 410 nm or less after the thickening step.

The method of manufacturing an optical molded body according to [24], further comprising:
an upper mold installation step of installing an upper mold for molding on the photocurable resin composition after the thickening step and before the curing step.

The method of manufacturing an optical molded body according to [24] or [25], further comprising:
a coating step of coating a lower mold for molding with the photocurable resin composition,
wherein the thickening step is performed after the coating step.

The method of manufacturing an optical molded body according to any one of [24] to [26],
wherein the thickening step includes a step of irradiating the photocurable resin composition with light using an irradiation device having a light source peak at a wavelength of 360 nm or more and 410 nm or less at an irradiation intensity of 90 mW or more and 130 mW or less.

The method of manufacturing an optical molded body according to any one of [24] to [27],
wherein the thickening step includes a step of irradiating the photocurable resin composition with light using an irradiation device having a light source peak at a wavelength of 360 nm or more and 410 nm or less for an irradiation time of 1 second or more and 300 seconds or less.

The method of manufacturing an optical molded body according to any one of [24] to [28],
wherein the thickening step includes a step of irradiating the photocurable resin composition with light using an irradiation device having a light source peak at a wavelength of 360 nm or more and 410 nm or less at an integrated light quantity of 50 mJ or more and 20.0 J or less.

The method of manufacturing an optical molded body according to any one of [24] to [29],
wherein in the thickening step, a thickness of the photocurable resin composition is 15.0 mm or less.

The method of manufacturing an optical molded body according to any one of [24] to [30],
wherein the photocurable resin composition includes the photocurable resin composition according to any one of [1] to [17].

### ADVANTAGEOUS EFFECTS OF INVENTION

According to the present invention, it is possible to provide a photocurable resin composition capable of reducing surface unevenness of an optical molded body.

### DESCRIPTION OF EMBODIMENTS

The notation of "(meth)acrylate" in the present specification represents a concept including both acrylate and methacrylate. The same applies to similar notations such as "(meth)acryloyl".

Each component of the present embodiment may be used alone or in combination of two or more kinds thereof. In addition, "to" representing a numerical range represents "or more" and "or less", and includes both the upper limit value and the lower limit value.

### (Photocurable resin composition)

The photocurable resin composition of the present embodiment (hereinafter, also simply referred to as a "resin composition" as appropriate) is a photocurable resin composition that can be used for an optical molded body.

In the photocurable resin composition of the present embodiment, an absorbance A₄₀₅ at a wavelength of 405 nm, which is measured according to <Measurement Method> described below, is 0.300 or less.

### <Measurement method>

A sample is prepared by dissolving the photocurable resin composition in isopropanol at a mass ratio of the photocurable resin composition to isopropanol of 7:93. Next, the sample is placed in a sample cell having an optical path length of 10 mm, and a transmitted light intensity I of light transmitted through the sample cell in a case where light having an incident light intensity I₀ at a wavelength of 405 nm is incident on the sample cell is measured. The absorbance A₄₀₅ at a wavelength of 405 nm is calculated according to the following expression (2). (2): ${A}_{405} = - {log}_{10} \left(I/{I}_{0}\right)$

The photocurable resin composition of the present embodiment has the above-described configuration, and thus can reduce surface unevenness of the optical molded body.

The photocurable resin composition contains, for example, a polymerizable compound. From the viewpoint of further reducing the surface unevenness of the optical molded body, the polymerizable compound preferably contains a (meth)acrylate monomer (A).

The properties of the photocurable resin composition are not particularly limited. However, from the viewpoint of suitability for forming an optical molded body by molding using an injection method or a casting method, the photocurable resin composition is preferably in a liquid state.

In addition, from the viewpoint of improving a degree of freedom in designing the optical molded body, the photocurable resin composition is preferably used for molding by a casting method.

Next, specific examples of the constitutional components of the photocurable resin composition will be described.

The photocurable resin composition may be composed of a polymerizable compound, or may contain a component other than the polymerizable compound. The photocurable resin composition may contain one or two or more selected from the group consisting of an antioxidant (B), a photopolymerization initiator (C), and a light stabilizer (D), which will be described later, as specific examples of other components.

### <Polymerizable compound>

The polymerizable compound may be a compound having a polymerizable functional group, and is preferably a compound having a radically polymerizable functional group. From the viewpoint of further reducing the surface unevenness of the optical molded body, examples of the radically polymerizable functional group include a (meth)acryloyl group. From the viewpoint of further reducing the surface unevenness of the optical molded body, the polymerizable compound preferably contains a (meth)acrylate monomer (A).

### <(Meth) acrylate monomer (A)>

The (meth)acrylate monomer (A) is a compound having a (meth)acryloyl group. The (meth)acrylate monomer (A) is a molecule capable of being bonded to other molecules by the radical polymerization of the (meth)acryloyl group.

From the viewpoint of improving the strength of the optical molded body obtained by the photocurable resin composition, the (meth)acrylate monomer (A) preferably contains one or two or more selected from the group consisting of a monofunctional (meth)acrylate monomer (A1) and a bifunctional or higher functional (meth)acrylate monomer (A2).

From the viewpoint of further reducing the surface unevenness of the optical molded body, in a case where the total content of the (meth)acrylate monomer (A) in the photocurable resin composition according to the present embodiment is set to 100 parts by mass, the content of the monofunctional (meth)acrylate monomer (A1) is preferably 0 parts by mass or more and 99 parts by mass or less, more preferably 10 parts by mass or more and 95 parts by mass or less, still more preferably 30 parts by mass or more and 90 parts by mass or less, even still more preferably 50 parts by mass or more and 90 parts by mass or less, even still more preferably 60 parts by mass or more and 85 parts by mass or less, and even still more preferably 70 parts by mass or more and 85 parts by mass or less.

From the viewpoint of further reducing the surface unevenness of the optical molded body, in a case where the total content of the (meth)acrylate monomer (A) in the photocurable resin composition according to the present embodiment is set to 100 parts by mass, the content of the bifunctional or higher functional (meth)acrylate monomer (A2) is preferably 1 part by mass or more and 100 parts by mass or less, more preferably 5 parts by mass or more and 90 parts by mass or less, still more preferably 10 parts by mass or more and 70 parts by mass or less, even still more preferably 10 parts by mass or more and 50 parts by mass or less, even still more preferably 15 parts by mass or more and 40 parts by mass or less, and even still more preferably 15 parts by mass or more and 30 parts by mass or less.

From the viewpoint of further reducing the surface unevenness of the optical molded body, the mass ratio of the content of the monofunctional (meth)acrylate monomer (A1) to the content of the bifunctional or higher functional (meth)acrylate monomer (A2) in the photocurable resin composition according to the present embodiment is preferably 0.0 or more, more preferably 0.1 or more and 10.0 or less, still more preferably 0.5 or more and 8.0 or less, even still more preferably 1.0 or more and 7.0 or less, even still more preferably 1.5 or more and 6.0 or less, even still more preferably 2.0 or more and 5.0 or less, and even still more preferably 3.0 or more and 4.5 or less.

From the viewpoint of further reducing the surface unevenness of the optical molded body, the (meth)acrylate monomer (A) preferably contains a (meth)acrylate monomer having an alicyclic skeleton. From the viewpoint of further reducing the surface unevenness of the optical molded body, the (meth)acrylate monomer having an alicyclic skeleton more preferably has one or two or more skeletons selected from the group consisting of an adamantane skeleton, a norbornane skeleton, and a dicyclopentadiene skeleton. From the viewpoint of further reducing the surface unevenness of the optical molded body, the (meth)acrylate monomer having an alicyclic skeleton further preferably includes one or two or more selected from the group consisting of dicyclopentanyl (meth)acrylate and isobornyl (meth)acrylate.

From the viewpoint of further reducing the surface unevenness of the optical molded body, in a case where the total content of the (meth)acrylate monomer (A) in the photocurable resin composition according to the present embodiment is set to 100 parts by mass, the content of the (meth)acrylate monomer having an alicyclic skeleton is preferably 30 parts by mass or more and 100 parts by mass or less, more preferably 40 parts by mass or more and 100 parts by mass or less, still more preferably 45 parts by mass or more and 100 parts by mass or less, even still more preferably 50 parts by mass or more and 100 parts by mass or less, even still more preferably 60 parts by mass or more and 100 parts by mass or less, even still more preferably 70 parts by mass or more and 100 parts by mass or less, even still more preferably 75 parts by mass or more and 95 parts by mass or less, and even still more preferably 80 parts by mass or more and 90 parts by mass or less.

From the viewpoint of further reducing the surface unevenness of the optical molded body, the (meth)acrylate monomer (A) preferably contains a (meth)acrylate monomer having a linear hydrocarbon skeleton, and more preferably contains 1,12-dodecanediol di(meth)acrylate.

From the viewpoint of further reducing the surface unevenness of the optical molded body, in a case where the total content of the photocurable resin composition according to the present embodiment is set to 100% by mass, the content of the (meth)acrylate monomer (A) in the photocurable resin composition according to the present embodiment is preferably 80% by mass or more and less than 100% by mass, more preferably 85% by mass or more and 99% by mass or less, still more preferably 90% by mass or more and 98% by mass or less, even still more preferably 92% by mass or more and 97% by mass or less, and even still more preferably 93% by mass or more and 96% by mass or less.

### <Monofunctional (meth)acrylate monomer (A1)>

The monofunctional (meth)acrylate monomer (A1) includes, for example, one or two or more selected from the group consisting of an aromatic ring monofunctional (meth)acrylate; an alicyclic monofunctional (meth)acrylate; a chain (or chain-type) monofunctional (meth)acrylate such as a linear monofunctional (meth)acrylate (for example, including a monofunctional (meth)acrylate monomer having a linear hydrocarbon skeleton) and a branched monofunctional (meth)acrylate.

The monofunctional (meth)acrylate monomer (A1) preferably includes one or two or more selected from the group consisting of isobornyl (meth)acrylate, dicyclopentanyl (meth)acrylate (for example, GM81HDA, manufactured by Qualipoly Chemical Corporation), 3,3,5-trimethylcyclohexyl (meth)acrylate, 4-tert-butylcyclohexyl (meth)acrylate, dicyclopentenyl (meth)acrylate (for example, FA-511AS, manufactured by Hitachi Chemical Co., Ltd.), dicyclopentenyloxyethyl (meth)acrylate, tetrahydrofurfuryl (meth)acrylate, 2-hydroxyethyl (meth)acrylate, 4-hydroxybutyl (meth)acrylate, isobutyl (meth)acrylate, t-butyl (meth)acrylate, isooctyl (meth)acrylate, 2-methoxyethyl (meth)acrylate, methoxytriethylene glycol (meth)acrylate, 2-ethoxyethyl (meth)acrylate, 3-methoxybutyl (meth)acrylate, ethoxyethyl (meth)acrylate, butoxyethyl (meth)acrylate, ethoxydiethylene glycol (meth)acrylate, methoxydihexylethyl (meth)acrylate, ethyldiglycol (meth)acrylate, cyclic trimethylolpropane formal mono(meth)acrylate, imide (meth)acrylate, isoamyl (meth)acrylate, ethoxylated succinic acid (meth)acrylate, trifluoroethyl (meth)acrylate, ω-carboxypolycaprolactone mono(meth)acrylate, cyclohexyl (meth)acrylate, 2-(2-ethoxyethoxy)ethyl (meth)acrylate, stearyl (meth)acrylate, isostearyl (meth)acrylate (for example, S-1800A, manufactured by Shin-Nakamura Chemical Co., Ltd.), diethylene glycol monobutyl ether (meth)acrylate, lauryl (meth)acrylate (for example, LA, manufactured by OSAKA ORGANIC CHEMICAL INDUSTRY LTD.), isodecyl (meth)acrylate, octyl/decyl (meth)acrylate, tridecyl (meth)acrylate, caprolactone (meth)acrylate, ethoxylated (4) nonylphenol (meth)acrylate, methoxypolyethylene glycol (350) mono(meth)acrylate, methoxypolyethylene glycol (550) mono(meth)acrylate, phenoxyethyl (meth)acrylate, benzyl (meth)acrylate, methylphenoxyethyl (meth)acrylate, caprolactone-modified tetrahydrofurfuryl (meth)acrylate, tribromophenyl (meth)acrylate, ethoxylated tribromophenyl (meth)acrylate, 2-phenoxyethyl (meth)acrylate, an ethylene oxide adduct of 2-phenoxyethyl (meth)acrylate, a propylene oxide adduct of 2-phenoxyethyl (meth)acrylate, phenoxydiethylene glycol (meth)acrylate, 2-hydroxy-3-phenoxypropyl (meth)acrylate, 3-methacryloyloxymethylcyclohexene oxide, 3-(meth)acryloyloxymethylcyclohexene oxide, ethoxylated-o-phenylphenol (meth)acrylate (for example, A-LEN-10, manufactured by Shin-Nakamura Chemical Co., Ltd.), 2-methacryloyloxy-2-methyladamantane, and 2-methacryloyloxy-2-ethyladamantane.

From the viewpoint of further reducing the surface unevenness of the optical molded body, the monofunctional (meth)acrylate monomer (A1) preferably includes a monofunctional (meth)acrylate monomer having an alicyclic skeleton, more preferably includes dicyclopentanyl (meth)acrylate, and still more preferably includes dicyclopentanyl methacrylate.

### <Bifunctional or higher functional (meth)acrylate monomer (A2)>

The bifunctional or higher functional (meth)acrylate monomer (A2) preferably includes one or two or more selected from the group consisting of an alicyclic bifunctional (meth)acrylate monomer and a linear bifunctional (meth)acrylate monomer.

The alicyclic bifunctional (meth)acrylate monomer is a bifunctional (meth)acrylate monomer having an alicyclic hydrocarbon structure in the molecular structure. From the viewpoint of improving heat resistance, the number of carbon atoms in the alicyclic hydrocarbon structure is preferably 4 or more and 14 or less, more preferably 5 or more and 12 or less, and still more preferably 6 or more and 10 or less.

The alicyclic hydrocarbon structure may be a saturated hydrocarbon structure or an unsaturated hydrocarbon structure. From the viewpoint of improving heat resistance, the alicyclic hydrocarbon structure is preferably a saturated hydrocarbon structure.

In addition, the alicyclic hydrocarbon structure may be a monocyclic hydrocarbon structure, or may be a polycyclic hydrocarbon structure such as a condensed ring-type hydrocarbon structure or a bridged hydrocarbon structure. The alicyclic bifunctional (meth)acrylate monomer may include a group having the alicyclic hydrocarbon structure in the molecular structure, and preferably includes a divalent group having the alicyclic hydrocarbon structure.

Specific examples of the monocyclic hydrocarbon group include a group having a cycloalkane structure, such as a cyclohexylene group and a cyclohexyl group; and a group having a cycloalkene skeleton, such as a cyclodecatrienediyl group and a cyclodecatrienyl group.

Specific examples of the polycyclic hydrocarbon group include a group having a dicyclopentadiene skeleton, such as a tricyclodecane diyl group, a dicyclopentanyl group, and a dicyclopentenyl group; a group having a norbornane skeleton, such as a norbornane diyl group, an isobornane diyl group, a norbornyl group, and an isobornyl group; and a group having an adamantane skeleton, such as an adamantane diyl group and an adamantyl group.

From the viewpoint of further reducing the surface unevenness of the optical molded body, the cyclic hydrocarbon group in the alicyclic bifunctional (meth)acrylate monomer is preferably a group having a dicyclopentadiene skeleton.

In addition, from the viewpoint of reducing the curing shrinkage during the molding of the optical molded body, the alicyclic bifunctional (meth)acrylate monomer preferably includes tricyclodecane dimethanol di(meth)acrylate, more preferably is tricyclodecane dimethanol di(meth)acrylate, and still more preferably is tricyclodecane dimethanol dimethacrylate (for example, DCP, manufactured by Shin-Nakamura Chemical Co., Ltd.).

The linear bifunctional (meth)acrylate monomer is a (meth)acrylate having a linear structure in the molecular structure and having two (meth)acryloyl groups.

From the viewpoint of improving the crack resistance during the molding of the optical molded body, the linear structure preferably includes a divalent linear hydrocarbon group. From the viewpoint of reducing the deviation in the amount of liquid due to the volatilization of the monomer during the molding of the optical molded body, the number of carbon atoms in the divalent linear hydrocarbon group is, for example, 1 or more, preferably 2 or more, and more preferably 4 or more. In addition, from the viewpoint of improving heat resistance, the number of carbon atoms in the divalent linear hydrocarbon group is preferably 20 or less, and more preferably 14 or less.

Specific examples of the linear bifunctional (meth)acrylate monomer include a di(meth)acrylate of an alkanediol.

The linear bifunctional (meth)acrylate monomer preferably includes one or two or more selected from the group consisting of 1,6-hexanediol di(meth)acrylate (for example, A-HD-N, manufactured by Shin-Nakamura Chemical Co., Ltd.; HD-N, manufactured by Shin-Nakamura Chemical Co., Ltd.), 1,9-nonanediol di(meth)acrylate (for example, A-NOD-N, manufactured by Shin-Nakamura Chemical Co., Ltd.; Light Acrylate 1,9ND-A, manufactured by KYOEISHA CHEMICAL Co., Ltd.; NOD-N, manufactured by Shin-Nakamura Chemical Co., Ltd.; Light Acrylate 1,9-ND-M, manufactured by KYOEISHA CHEMICAL Co., Ltd.), 1,10-decanediol di(meth)acrylate (for example, A-DOD-N, manufactured by Shin-Nakamura Chemical Co., Ltd.; DOD-N, manufactured by Shin-Nakamura Chemical Co., Ltd.), 1,12-dodecanediol di(meth)acrylate (for example, DDD, manufactured by Shin-Nakamura Chemical Co., Ltd.; SR262, manufactured by Arkema S.A.), ethylene glycol di(meth)acrylate (for example, SR206NS, manufactured by Arkema S.A.), triethylene glycol di(meth) acrylate (for example, SR272, manufactured by Arkema S.A.), polyethylene glycol di(meth)acrylate (for example, A-400, manufactured by Shin-Nakamura Chemical Co., Ltd.), 1,3-butanediol di(meth)acrylate (for example, BG, manufactured by Shin-Nakamura Chemical Co., Ltd.), and 1,4-butanediol di(meth)acrylate (for example, BD, manufactured by Shin-Nakamura Chemical Co., Ltd.).

From the viewpoint of further reducing the surface unevenness of the optical molded body, the bifunctional or higher functional (meth)acrylate monomer (A2) preferably has an alicyclic skeleton. From the viewpoint of further reducing the surface unevenness of the optical molded body, the bifunctional or higher functional (meth)acrylate monomer (A2) more preferably includes tricyclodecane dimethanol di(meth)acrylate, and still more preferably includes tricyclodecane dimethanol dimethacrylate.

From the viewpoint of further reducing the surface unevenness of the optical molded body, the bifunctional or higher functional (meth)acrylate monomer (A2) preferably has a linear hydrocarbon skeleton. From the viewpoint of further reducing the surface unevenness of the optical molded body, the bifunctional or higher functional (meth)acrylate monomer (A2) more preferably includes 1,12-dodecanediol di(meth)acrylate, and still more preferably includes 1,12-dodecanediol dimethacrylate.

### <Antioxidant (B)>

The photocurable resin composition according to the present embodiment may further contain an antioxidant (B). The antioxidant (B) is not particularly limited, and a known antioxidant can be used. The antioxidant (B) includes, for example, one or two or more selected from the group consisting of a phenol-based antioxidant, a phosphorus-based antioxidant, a sulfur-based antioxidant, a hindered amine-based antioxidant, and a thioether-based antioxidant.

Examples of the phenol-based antioxidant include 2,6-di-t-butylhydroxytoluene and pentaerythritol tetrakis[3-(3,5-di-tert-butyl-4-hydroxyphenyl)propionate].

Examples of a commercially available product of the phenol-based antioxidant include ADEKA STAB series AO-20, AO-30, AO-40, AO-50, AO-60, and AO-80 manufactured by ADEKA Corporation.

Examples of the phosphorus-based antioxidant include phosphines such as trialkylphosphine and triarylphosphine, trialkyl phosphite, and triaryl phosphite.

Examples of a commercially available product of the phosphorus-based antioxidant include ADEKA STAB series PEP-4C, PEP-8, PEP-24G, PEP-36, HP-10, 260, 522A, 329K, 1178, 1500, 135A, and 3010 manufactured by ADEKA Corporation.

Examples of sulfur-based antioxidant include dilauryl 3,3-thiodipropionate, dimyristyl 3,3'-thiodipropionate, distearyl 3,3-thiodipropionate, lauryl stearyl 3,3-thiodipropionate, pentaerythritol-tetrakis-(β-lauryl-thio-propionate), 3,9-bis(2-dodecylthioethyl)-2,4,8,10-tetraoxaspiro[5,5]undecane, and the like.

Examples of the hindered amine-based antioxidant include bis(1,2,2,6,6-pentamethyl-4-piperidinyl)sebacate, methyl(1,2,2,6,6-pentamethyl-4-piperidinyl)sebacate, 2,4-bis[N-butyl-N-(1-cyclohexyloxy-2,2,6,6-tetramethylpiperidine-4-yl)amino]-6-(2-hydroxyethylamino)-1,3,5-triazine, decanedioic acid bis(2,2,6,6-tetramethyl-1-(octyloxy)-4-piperidinyl)ester, sebacic acid bis(1,2,2,6,6-pentamethyl-4-piperidyl), and the like.

Examples of a commercially available product of the hindered amine-based antioxidant include hindered amine-based antioxidants such as ADEKA STAB series AL-72 manufactured by ADEKA Corporation and TINUVIN series 111FDL, 123, 144, 152, 292, and 5100 manufactured by BASF.

Examples of the thioether-based antioxidant include 3,3'-thiobispropionic acid ditridecyl and bis[3-(dodecylthio)propionic acid] 2,2-bis[[3-(dodecylthio)-1-oxopropyloxy]methyl]-1,3-propanediyl.

Examples of a commercially available product of the thioether-based antioxidant include ADEKA STAB series AO-26, AO-412S, and AO-503A manufactured by ADEKA Corporation.

From the viewpoint of further reducing the coloration of the optical molded body, the antioxidant (B) preferably includes one or two or more selected from the group consisting of a phenol-based antioxidant and a thioether-based antioxidant. From the viewpoint of further reducing the coloration of the optical molded body, the antioxidant (B) more preferably includes one or two or more selected from the group consisting of bis[3-(dodecylthio)propionic acid] 2,2-bis[[3-(dodecylthio)-1-oxopropyloxy]methyl]-1,3-propanediyl (for example, ADEKA STAB AO-412S, manufactured by ADEKA Corporation) and pentaerythritol tetrakis[3-(3,5-di-tert-butyl-4-hydroxyphenyl)propionate] (for example, ADEKA STAB AO-60, manufactured by ADEKA Corporation).

From the viewpoint of further reducing the coloration of the optical molded body, in a case where the total content of the (meth)acrylate monomer (A) is set to 100 parts by mass, the content of the antioxidant (B) in the photocurable resin composition according to the present embodiment is preferably 0.010 parts by mass or more and 10 parts by mass or less, more preferably 0.050 parts by mass or more and 5.0 parts by mass or less, still more preferably 0.10 parts by mass or more and 3.0 parts by mass or less, even more preferably 0.20 parts by mass or more and 2.0 parts by mass or less, and even still more preferably 0.50 parts by mass or more and 1.5 parts by mass or less.

From the viewpoint of further reducing the coloration of the optical molded body, in a case where the total amount of solid contents in the photocurable resin composition (the total amount of components remaining as solid substances in a case of being cured into a cured product) is set to 100% by mass, the content of the antioxidant (B) in the photocurable resin composition according to the present embodiment is preferably 0.010% by mass or more and 5.0% by mass or less, more preferably 0.050% by mass or more and 4.0% by mass or less, still more preferably 0.10% by mass or more and 3.0% by mass or less, even still more preferably 0.50% by mass or more and 2.0% by mass or less, and even still more preferably 0.90% by mass or more and 1.0% by mass or less.

### <Photopolymerization initiator (C)>

The photocurable resin composition of the present embodiment may further contain a photopolymerization initiator (C). The photopolymerization initiator (C) is not particularly limited, and a known polymerization initiator can be used.

From the viewpoint of stably forming the optical molded body at a low temperature, the photopolymerization initiator (C) preferably includes a photoradical polymerization initiator. The photoradical polymerization initiator is a compound that generates a radical upon irradiation with ultraviolet rays or visible light.

Examples of the photoradical polymerization initiator include an acylphosphine oxide-based initiator, an oxyphenylacetic acid ester-based initiator, a benzoylformic acid-based initiator, and a hydroxyphenyl ketone-based initiator.

Examples of the photopolymerization initiator (C) include benzophenone, Michler's ketone, 4,4'-bis(diethylamino)benzophenone, xanthone, thioxanthone, isopropylxanthone, 2,4-diethylthioxanthone, 2-ethylanthraquinone, acetophenone, 2-hydroxy-2-methyl-4'-isopropylpropionophenone, isopropylbenzoin ether, isobutylbenzoin ether, 2,2-diethoxyacetophenone, 2,2-dimethoxy-2-phenylacetophenone, camphorquinone, benzanthrone, ethyl 4-dimethylaminobenzoate, isoamyl 4-dimethylaminobenzoate, 4,4'-di(t-butylperoxycarbonyl)benzophenone, 3,4,4'-tri(t-butylperoxycarbonyl)benzophenone, 3,3',4,4'-tetra(t-butylperoxycarbonyl)benzophenone, 3,3',4,4'-tetra(t-hexylperoxycarbonyl)benzophenone, 3,3'-di(methoxycarbonyl)-4,4'-di(t-butylperoxycarbonyl)benzophenone, 3,4'-di(methoxycarbonyl)-4,3'-di(t-butylperoxycarbonyl)benzophenone, 4,4'-di(methoxycarbonyl)-3,3'-di(t-butylperoxycarbonyl)benzophenone, 2-(4'-methoxystyryl)-4,6-bis(trichloromethyl)-s-triazine, 2-(3',4'-dimethoxystyryl)-4,6-bis(trichloromethyl)-s-triazine, 2-(2',4'-dimethoxystyryl)-4,6-bis(trichloromethyl)-s-triazine, 2-(2'-methoxystyryl)-4,6-bis(trichloromethyl)-s-triazine, 2-(4'-pentyloxystyryl)-4,6-bis(trichloromethyl)-s-triazine, 4-[p-N,N-di(ethoxycarbonylmethyl)]-2,6-di(trichloromethyl)-s-triazine, 1,3-bis(trichloromethyl)-5-(2'-chlorophenyl)-s-triazine, 1,3-bis(trichloromethyl)-5-(4'-methoxyphenyl)-s-triazine, 2-(p-dimethylaminostyryl)benzoxazole, 2-(p-dimethylaminostyryl)benzothiazole, 2-mercaptobenzothiazole, 3,3'-carbonylbis(7-diethylaminocoumarin), 2-(o-chlorophenyl)-4,4',5,5'-tetraphenyl-1,2'-biimidazole, 2,2'-bis(2-chlorophenyl)-4,4',5,5'-tetrakis(4-ethoxycarbonylphenyl)-1,2'-biimidazole, 2,2'-bis(2,4-dichlorophenyl)-4,4',5,5'-tetraphenyl-1,2'-biimidazole, 2,2'-bis(2,4-dibromophenyl)-4,4',5,5'-tetraphenyl-1,2'-biimidazole, 2,2'-bis(2,4,6-trichlorophenyl)-4,4',5,5'-tetraphenyl-1,2'-biimidazole, 3-(2-methyl-2-dimethylaminopropionyl)carbazole, 3,6-bis(2-methyl-2-morpholinopropionyl)-9-n-dodecylcarbazole, bis(η5-2,4-cyclopentadiene-1-yl)-bis(2,6-difluoro-3-(1H-pyrrole-1-yl)-phenyl) titanium, 1-hydroxycyclohexyl phenyl ketone, 2-hydroxy-2-methyl-1-phenyl-1-propanone, 1-[4-(2-hydroxyethoxy)-phenyl]-2-hydroxy-2-methyl-1-propanone, 2-hydroxy-1-{4-[4-(2-hydroxy-2-methyl-propionyl)-benzyl]phenyl}-2-methyl-1-propanone, 2-methyl-1-[4-(methylthio)phenyl]-2-morpholino-1-propanone, 2-(dimethylamino)-1-(4-morpholinophenyl)-2-benzyl-1-butanone, 2-(dimethylamino)-2-[(4-methylphenyl)methyl]-1-[4-(4-morpholinyl)phenyl]-1-butanone, oxy-phenyl-acetic acid 2-[2-oxo-2-phenyl-acetoxy-ethoxy]-ethyl ester, oxy-phenyl-acetic acid 2-[2-hydroxy-ethoxy]-ethyl ester, methyl benzoylformate, bis(2,4,6-trimethylbenzoyl)phenylphosphine oxide, 2,4,6-trimethylbenzoyldiphenylphosphine oxide, 2,4,6-trimethylbenzoyldiphenylphosphinic acid ester, 1-[4-(phenylthio)phenyl]-1,2-octanedione 2-(O-benzoyloxime), 1-[9-ethyl-6-(2-methylbenzoyl)-9H-carbazole-3-yl]-ethanone-1-(O-acetyloxime), and the like.

From the viewpoint of further reducing the surface unevenness of the optical molded body, the photopolymerization initiator (C) preferably includes a hydroxyphenyl ketone-based initiator, and more preferably includes 1-hydroxycyclohexyl phenyl ketone (for example, Omnirad 184, manufactured by IGM Resins B.V.).

From the viewpoint of further reducing the surface unevenness of the optical molded body, in a case where the content of the (meth)acrylate monomer (A) is set to 100 parts by mass, the content of the photopolymerization initiator (C) in the photocurable resin composition according to the present embodiment is preferably 0.10 parts by mass or more, more preferably 0.50 parts by mass or more, still more preferably 1.0 part by mass or more, even still more preferably 2.0 parts by mass or more, and even still more preferably 3.0 parts by mass or more.

From the viewpoint of improving the uniformity of the thickness of the photocurable resin composition during curing, in a case where the content of the (meth)acrylate monomer (A) is set to 100 parts by mass, the content of the photopolymerization initiator (C) in the photocurable resin composition according to the present embodiment is preferably 10 parts by mass or less, more preferably 8.0 parts by mass or less, still more preferably 6.0 parts by mass or less, even still more preferably 5.0 parts by mass or less, and even still more preferably 4.5 parts by mass or less.

From the viewpoint of further reducing the surface unevenness of the optical molded body and the viewpoint of improving the uniformity of the thickness of the photocurable resin composition during curing, in a case where the content of the (meth)acrylate monomer (A) is set to 100 parts by mass, the content of the photopolymerization initiator (C) in the photocurable resin composition according to the present embodiment is preferably 0.10 parts by mass or more and 10 parts by mass or less, more preferably 0.50 parts by mass or more and 8.0 parts by mass or less, still more preferably 1.0 part by mass or more and 6.0 parts by mass or less, even still more preferably 2.0 parts by mass or more and 5.0 parts by mass or less, and even still more preferably 3.0 parts by mass or more and 4.5 parts by mass or less.

From the viewpoint of further reducing the surface unevenness of the optical molded body, in a case where the total amount of solid contents in the photocurable resin composition (the total amount of components remaining as solid substances in a case of being cured into a cured product) is set to 100% by mass, the content of the photopolymerization initiator (C) in the photocurable resin composition according to the present embodiment is preferably 0.10% by mass or more and 10% by mass or less, more preferably 1.0% by mass or more and 8.0% by mass or less, still more preferably 2.0% by mass or more and 6.0% by mass or less, even still more preferably 3.0% by mass or more and 5.0% by mass or less, and even still more preferably 3.5% by mass or more and 4.5% by mass or less.

### <Light Stabilizer (D)>

The photocurable resin composition of the present embodiment may further include a light stabilizer (D). The light stabilizer (D) is not particularly limited, and a known light stabilizer can be used. The photocurable resin composition can improve the coloring resistance by containing the light stabilizer (D).

From the viewpoint of further improving the coloring resistance, the light stabilizer (D) preferably includes a hindered amine-based light stabilizer.

Examples of the hindered amine-based light stabilizer include methacrylic acid (1,2,2,6,6-pentamethyl-piperidin-4-yl), decanedioic acid bis(2,2,6,6-tetramethyl-1(octyloxy)-4-piperidinyl) ester, a reaction product of 1,1-dimethylethyl hydroperoxide and octane (70% by mass), and polypropylene (30% by mass), bis(1,2,2,6,6-pentamethyl-4-piperidyl) [[3,5-bis(1,1-dimethylethyl)-4-hydroxyphenyl]methyl]butylmalonate, a mixture of bis(1,2,2,6,6-pentamethyl-4-piperidyl)sebacate and methyl-1,2,2,6,6-pentamethyl-4-piperidyl sebacate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, a mixture of 2,2,6,6-tetramethyl-4-piperidyl-1,2,3,4-butanetetracarboxylate and tridecyl-1,2,3,4-butanetetracarboxylate, and a mixture of 1,2,2,6,6-pentamethyl-4-piperidyl-1,2,3,4-butanetetracarboxylate and tridecyl-1,2,3,4-butanetetracarboxylate.

From the viewpoint of further improving the coloring resistance, the light stabilizer (D) preferably includes 1,2,2,6,6-pentamethyl-4-piperidyl methacrylate (for example, ADEKA STAB LA-82, manufactured by ADEKA Corporation).

From the viewpoint of further improving the coloring resistance of the optical molded body, in a case where the total content of the (meth)acrylate monomer (A) is set to 100 parts by mass, the content of the light stabilizer (D) in the photocurable resin composition according to the present embodiment is preferably 0.010 parts by mass or more and 5 parts by mass or less, more preferably 0.050 parts by mass or more and 1.0 part by mass or less, still more preferably 0.060 parts by mass or more and 0.50 part by mass or less, even still more preferably 0.080 parts by mass or more and 0.20 part by mass or less, and even still more preferably 0.090 parts by mass or more and 0.11 part by mass or less.

From the viewpoint of further reducing the surface unevenness of the optical molded body, in a case where the total amount of solid contents in the photocurable resin composition (the total amount of components remaining as solid substances in a case of being cured into a cured product) is set to 100% by mass, the content of the light stabilizer (D) in the photocurable resin composition according to the present embodiment is preferably 0.0010% by mass or more, more preferably 0.0050% by mass or more, still more preferably 0.010% by mass or more, even still more preferably 0.050% by mass or more, even still more preferably 0.090% by mass or more, even still more preferably 0.094% by mass or more, and even still more preferably 0.095% by mass or more.

From the viewpoint of reducing the bleeding-out, in a case where the total amount of solid contents in the photocurable resin composition (the total amount of components remaining as solid substances in a case of being cured into a cured product) is set to 100% by mass, the content of the light stabilizer (D) in the photocurable resin composition according to the present embodiment is preferably 1.0% by mass or less, more preferably 0.60% by mass or less, still more preferably 0.50% by mass or less, even still more preferably 0.40% by mass or less, and even still more preferably 0.30% by mass or less.

From the viewpoint of further reducing the surface unevenness of the optical molded body and the viewpoint of reducing the bleeding-out, in a case where the total amount of solid contents in the photocurable resin composition (the total amount of components remaining as solid substances in a case of being cured into a cured product) is set to 100% by mass, the content of the light stabilizer (D) in the photocurable resin composition according to the present embodiment is preferably 0.0010% by mass or more and 1.0% by mass or less, more preferably 0.0050% by mass or more and 0.60% by mass or less, still more preferably 0.010% by mass or more and 0.50% by mass or less, even still more preferably 0.050% by mass or more and 0.40% by mass or less, even still more preferably 0.090% by mass or more and 0.30% by mass or less, even still more preferably 0.094% by mass or more and 0.20% by mass or less, and even still more preferably 0.095% by mass or more and 0.10% by mass or less.

### <Other components>

The photocurable resin composition may contain one or two or more selected from the group consisting of a filler, a curing accelerator, a plasticizer, a heat stabilizer, a flame retardant, an antistatic agent, an antifoaming agent, a silane coupling agent, an ultraviolet absorber, a surfactant, and a leveling agent as specific examples of other components other than the polymerizable compound (for example, the (meth)acrylate monomer (A)), the antioxidant (B), the photopolymerization initiator (C), and the light stabilizer (D).

### <Method for manufacturing photocurable resin composition>

The photocurable resin composition according to the present embodiment can be obtained by mixing the polymerizable compound (for example, the (meth)acrylate monomer (A)) and other components such as the antioxidant (B), the photopolymerization initiator (C), or the light stabilizer (D) as necessary by a known method in the related art.

### <Physical properties of photocurable resin composition>

Next, the physical properties of the photocurable resin composition will be described.

The absorbance A₄₀₅ of the photocurable resin composition according to the present embodiment at a wavelength of 405 nm, which is measured according to the following <measurement method>, will be described.

From the viewpoint of reducing the surface unevenness of the optical molded body, the absorbance A₄₀₅ is 0.300 or less, preferably 0.250 or less, more preferably 0.200 or less, still more preferably 0.150 or less, even still more preferably 0.100 or less, even still more preferably 0.050 or less, and even still more preferably 0.030 or less.

From the viewpoint of allowing the photocurable resin composition to be curable with light having a wavelength of 405 nm, the absorbance A₄₀₅ is preferably 0.000 or more, more preferably 0.005 or more, still more preferably 0.010 or more, and even still more preferably 0.015 or more.

From the viewpoint of reducing the surface unevenness of the optical molded body, the absorbance A₄₀₅ is preferably 0.000 or more and 0.300 or less, more preferably 0.005 or more and 0.250 or less, still more preferably 0.010 or more and 0.200 or less, even still more preferably 0.010 or more and 0.150 or less, even still more preferably 0.010 or more and 0.100 or less, even still more preferably 0.010 or more and 0.050 or less, and even still more preferably 0.015 or more and 0.030 or less.

### <Measurement method>

A sample is prepared by dissolving the photocurable resin composition in isopropanol at a mass ratio of the photocurable resin composition to the isopropanol of 7:93. Next, the sample is placed in a sample cell having an optical path length of 10 mm, and light having a wavelength of 405 nm and an incident light intensity I₀ is incident on the sample cell. A transmitted light intensity I of the light transmitted through the sample cell is measured. After the measurement, the absorbance A₄₀₅ at a wavelength of 405 nm is calculated according to the following expression (3). (3): ${A}_{405} = - {log}_{10} \left(I/{I}_{0}\right)$

Here, in the present embodiment, the <measurement method> can be more specifically performed according to the method described in Examples.

### <Uses of photocurable resin composition>

Next, the uses of the photocurable resin composition will be described.

Since the photocurable resin composition of the present embodiment can reduce the surface unevenness of the optical molded body, it can be used in methods of forming an optical molded body, such as an injection molding method, a compression molding method, an injection compression molding method, an extrusion molding method, a solution casting method, and a casting method. In particular, the photocurable resin composition according to the present embodiment can be used in a casting method.

Since the photocurable resin composition of the present embodiment can reduce the surface unevenness of the optical molded body, the uses of the optical molded body molded from the photocurable resin composition are not particularly limited, and it can be used for various applications.

The photocurable resin composition of the present embodiment can be used, for example, preferably for a lens. The lens includes, for example, one or two or more selected from the group consisting of a spherical lens, an aspherical lens, a biconvex lens, a plano-convex lens, a convex meniscus lens, a biconcave lens, a plano-concave lens, and a concave meniscus lens.

The photocurable resin composition of the present embodiment can be used, for example, more preferably for one or two or more lenses selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The photocurable resin composition of the present embodiment can be used, for example, preferably for a cover for a display (hereinafter, also referred to as a cover display). The cover display includes, for example, one or two or more selected from the group consisting of a front surface cover display and a full-surface cover display.

The photocurable resin composition of the present embodiment can be used, for example, more preferably for one or two or more cover displays selected from the group consisting of a cover display for a virtual reality device (cover display for a VR device), a cover display for a mixed reality device (cover display for an MR device), a cover display for an augmented reality device (cover display for an AR device), a cover display for a cross-reality device (cover display for an xR device), and a cover display for a head-mounted display (cover display for an HMD).

### (Optical molded body)

The optical molded body according to the present embodiment includes the cured product of the photocurable resin composition according to the present embodiment. The optical molded body according to the present embodiment can be produced using the photocurable resin composition according to the present embodiment. The optical molded body can be manufactured from the photocurable resin composition of the present embodiment by any method such as an injection molding method, a compression molding method, an injection compression molding method, an extrusion molding method, a solution casting method, and a casting method.

The optical molded body of the present embodiment may be manufactured by a manufacturing method of an optical molded body of the present embodiment described later using the photocurable resin composition of the present embodiment.

The optical molded body according to the present embodiment includes a lens. The lens includes, for example, one or two or more selected from the group consisting of a spherical lens, an aspherical lens, a biconvex lens, a plano-convex lens, a convex meniscus lens, a biconcave lens, a plano-concave lens, and a concave meniscus lens.

The lens of the present embodiment includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

The optical molded body of the present embodiment includes a cover for a display (cover display). The cover display includes, for example, one or two or more selected from the group consisting of a front surface cover display and a full-surface cover display.

The cover display of the present embodiment includes one or two or more selected from the group consisting of a cover display for a virtual reality device (cover display for a VR device), a cover display for a mixed reality device (cover display for an MR device), a cover display for an augmented reality device (cover display for an AR device), a cover display for a cross-reality device (cover display for an xR device), and a cover display for a head-mounted display (cover display for an HMD) .

The maximum thickness portion of the optical molded body is a portion of the optical molded body where the thickness of the optical member is maximum. The position of the maximum thickness portion of the optical molded body is not particularly limited, and can be appropriately set according to the use application and the like.

For example, in the optical molded body of the present embodiment, the maximum thickness portion is preferably 1.0 mm or more, the maximum thickness portion is more preferably 1.1 mm or more, the maximum thickness portion is still more preferably 1.2 mm or more, the maximum thickness portion is even still more preferably 1.5 mm or more, the maximum thickness portion is even still more preferably 2.0 mm or more, the maximum thickness portion is even still more preferably 3.0 mm or more, the maximum thickness portion is even still more preferably 4.0 mm or more, and the maximum thickness portion is even still more preferably 5.0 mm or more.

For example, in the optical molded body of the present embodiment, the maximum thickness portion is preferably 20.0 mm or less, the maximum thickness portion is more preferably 19.9 mm or less, the maximum thickness portion is still more preferably 19.8 mm or less, the maximum thickness portion is even still more preferably 19.5 mm or less, the maximum thickness portion is even still more preferably 18.0 mm or less, the maximum thickness portion is even still more preferably 17.0 mm or less, the maximum thickness portion is even still more preferably 16.0 mm or less, and the maximum thickness portion is even still more preferably 15.0 mm or less.

For example, in the optical molded body of the present embodiment, the maximum thickness portion is preferably 1.0 mm or more and 20.0 mm or less, the maximum thickness portion is more preferably 1.1 mm or more and 19.9 mm or less, the maximum thickness portion is still more preferably 1.2 mm or more and 19.8 mm or less, the maximum thickness portion is even still more preferably 1.5 mm or more and 19.5 mm or less, the maximum thickness portion is even still more preferably 2.0 mm or more and 19.0 mm or less, the maximum thickness portion is even still more preferably 3.0 mm or more and 18.0 mm or less, the maximum thickness portion is even still more preferably 4.0 mm or more and 17.0 mm or less, the maximum thickness portion is even still more preferably 5.0 mm or more and 16.0 mm or less, and the maximum thickness portion is even still more preferably 5.0 mm or more and 15.0 mm or less.

The photocurable resin composition of the present embodiment can reduce the surface unevenness of the optical molded body, and thus can also be applied to an optical molded body having a thickness of 1.0 mm or more.

### (Method for manufacturing optical molded body)

Hereinafter, each step of the method for manufacturing an optical molded body of the present embodiment, and the raw materials and the like used in the method for manufacturing an optical molded body of the present embodiment will be described.

The photocurable resin composition used in the method for manufacturing an optical molded body of the present embodiment preferably includes the photocurable resin composition of the present embodiment.

The method for manufacturing an optical molded body of the present embodiment includes the following steps.
· Thickening step: the viscosity of the photocurable resin composition is increased by irradiating the photocurable resin composition with light using an irradiation device having a light source peak at a wavelength of 360 nm or more and 410 nm or less.
· Curing step: After the thickening step, the photocurable resin composition is cured by irradiating the photocurable resin composition with light using an irradiation device having a light source peak at a wavelength of 360 nm or more and 410 nm or less.

Since the method for manufacturing an optical molded body of the present embodiment has the above-described configuration, the surface unevenness of the optical molded body can be reduced.

### <Thickening Step>

In the thickening step, the viscosity of the photocurable resin composition is increased by irradiating the photocurable resin composition with light using an irradiation device having a light source peak at a wavelength of 360 nm or more and 410 nm or less. The type and shape of the device used in the thickening step are not particularly limited since the type and shape of the device are appropriately changed depending on the properties of the photocurable resin composition used for the optical molded body, the shape of the optical molded body, and the like. In addition, the curing conditions in the thickening step (the wavelength of the irradiation light, the intensity of the irradiation light, the irradiation time, the atmosphere during irradiation (the temperature, the humidity, the atmospheric pressure, the type of gas, and the like), and the like) are not particularly limited since the curing conditions are appropriately changed depending on the properties of the photocurable resin composition used for the optical molded body, the shape of the optical molded body, and the like.

From the viewpoint of reducing the surface unevenness of the optical molded body, the light source peak of the irradiation device used in the thickening step of the present embodiment is present at a wavelength of 360 nm or more and 410 nm or less, preferably a wavelength of 370 nm or more and 410 nm or less, more preferably a wavelength of 380 nm or more and 410 nm or less, still more preferably a wavelength of 390 nm or more and 410 nm or less, and even still more preferably a wavelength of 400 nm or more and 410 nm or less.

In the thickening step of the present embodiment, from the viewpoint of further reducing the surface unevenness of the optical molded body, the irradiation intensity at which the photocurable resin composition is irradiated with light using an irradiation device having a light source peak at a wavelength of 360 nm or more and 410 nm or less is preferably 90 mW or more and 130 mW or less, more preferably 100 mW or more and 120 mW or less, still more preferably 105 mW or more and 115 mW or less, and even still more preferably 110 **mW.**

In other words, from the viewpoint of further reducing the surface unevenness of the optical molded body, the thickening step of the present embodiment includes a step of irradiating the photocurable resin composition with light using an irradiation device having a light source peak at a wavelength of 360 nm or more and 410 nm or less at the above-described irradiation intensity (preferably 90 mW or more and 130 mW or less, more preferably 100 mW or more and 120 mW or less, still more preferably 105 mW or more and 115 mW or less, and even still more preferably 110 mW).

In the thickening step of the present embodiment, from the viewpoint of further reducing the surface unevenness of the optical molded body, the irradiation time for irradiating the photocurable resin composition with light using an irradiation device having a light source peak at a wavelength of 360 nm or more and 410 nm or less is preferably 1 second or more and 300 seconds or less, more preferably 10 seconds or more and 240 seconds or less, still more preferably 30 seconds or more and 120 seconds or less, even more preferably 45 seconds or more and 90 seconds or less, and even still more preferably 50 seconds or more and 70 seconds or less.

In other words, from the viewpoint of further reducing the surface unevenness of the optical molded body, the thickening step of the present embodiment includes a step of irradiating the photocurable resin composition with light using an irradiation device having a light source peak at a wavelength of 360 nm or more and 410 nm or less at the above-described irradiation time (preferably 1 second or more and 300 seconds or less, more preferably 10 seconds or more and 240 seconds or less, still more preferably 30 seconds or more and 120 seconds or less, even more preferably 45 seconds or more and 90 seconds or less, and even still more preferably 50 seconds or more and 70 seconds or less).

In the thickening step of the present embodiment, from the viewpoint of further reducing the surface unevenness of the optical molded body, the integrated light quantity for irradiating the photocurable resin composition with light using an irradiation device having a light source peak at a wavelength of 360 nm or more and 410 nm or less is preferably 50 mJ or more and 20.0 J or less, more preferably 100 mJ or more and 15.0 J or less, still more preferably 1.0 J or more and 10.0 J or less, even more preferably 5.0 J or more and 8.0 J or less, and even still more preferably 6.0 J or more and 7.0 J or less.

In other words, from the viewpoint of further reducing the surface unevenness of the optical molded body, the thickening step of the present embodiment includes a step of irradiating the photocurable resin composition with light using an irradiation device having a light source peak at a wavelength of 360 nm or more and 410 nm or less at the above-described integrated light quantity (preferably 50 mJ or more and 20.0 J or less, more preferably 100 mJ or more and 15.0 J or less, still more preferably 1.0 J or more and 10.0 J or less, even more preferably 5.0 J or more and 8.0 J or less, and even still more preferably 6.0 J or more and 7.0 J or less).

In the thickening step, from the viewpoint of further reducing the surface unevenness of the optical molded body, the thickness of the photocurable resin composition is preferably 1.0 mm or more and 20.0 mm or less, more preferably 1.5 mm or more and 19.0 mm or less, still more preferably 2.0 mm or more and 18.0 mm or less, even more preferably 2.5 mm or more and 17.0 mm or less, even still more preferably 2.7 mm or more and 16.0 mm or less, and even further more preferably 2.9 mm or more and 15.0 mm or less.

### <Curing Step>

In the curing step, the photocurable resin composition is cured by irradiating the photocurable resin composition with light using an irradiation device having a light source peak at a wavelength of 360 nm or more and 410 nm or less. The curing step is performed after the thickening step.

The type and shape of the device used in the curing step are not particularly limited since the type and shape of the device are appropriately changed depending on the properties of the photocurable resin composition used for the optical molded body, the shape of the optical molded body, and the like. In addition, the curing conditions in the curing step (the wavelength of the irradiation light, the intensity of the irradiation light, the irradiation time, the atmosphere during irradiation (the temperature, the humidity, the atmospheric pressure, the type of gas, and the like), and the like) are not particularly limited since the curing conditions are appropriately changed depending on the properties of the photocurable resin composition used for the optical molded body, the shape of the optical molded body, and the like.

The light with which the photocurable resin composition is irradiated may be, for example, ultraviolet rays. The ultraviolet rays include ultraviolet C (UVC) having a wavelength of 200 nm or more and 280 nm or less, ultraviolet B (UVB) having a wavelength of 280 nm or more and 315 nm or less, and ultraviolet A (UVA) having a wavelength of 315 nm or more and 405 nm or less.

In a case where ultraviolet rays are used, a light source such as sunlight, a chemical lamp, a mercury lamp, a metal halide lamp, or a UV LED can be used.

From the viewpoint of improving the appearance of the obtained optical molded body, the irradiation intensity of the ultraviolet irradiation is preferably 500 mW or more and 1,000 mW or less, more preferably 700 mW or more and 950 mW or less, still more preferably 750 mW or more and 900 mW or less, and even still more preferably 800 mW or more and 850 mW or less. The irradiation intensity of the ultraviolet rays represents the irradiation intensity of the ultraviolet rays.

From the viewpoint of improving the appearance of the obtained optical molded body, the integrated light quantity of the ultraviolet irradiation is preferably 30 J or more and 200 J or less, more preferably 50 J or more and 150 J or less, still more preferably 70 J or more and 120 J or less, and even still more preferably 90 J or more and 100 J or less. The integrated light quantity of the ultraviolet rays represents the total integrated light quantity of the ultraviolet rays.

The method of manufacturing an optical molded body according to the present embodiment may further include the following steps.
· Coating step: a step of coating a lower mold for molding with the photocurable resin composition
. Upper mold installation step: a step of installing an upper mold for molding on the photocurable resin composition

### <Coating Step>

In the coating step, the photocurable resin composition is coated on the lower mold for molding. From the viewpoint of easily performing the coating of the photocurable resin composition, the thickening step is preferably performed after the coating step.

### <Upper mold installation step>

In the upper mold installation step, the upper mold for molding is installed on the photocurable resin composition. From the viewpoint of reducing the leakage of the photocurable resin composition from between the upper mold and the lower mold in a case where the upper mold is installed, the upper mold installation step is preferably performed after the thickening step and before the curing step.

### (Optical device)

The optical device according to the present embodiment includes the optical molded body according to the present embodiment. The type of the optical device of the present embodiment is not particularly limited. Examples of the optical device of the present embodiment include a virtual reality device (VR device), a mixed reality device (MR device), an augmented reality device (AR device), a cross-reality device (xR device), and a head-mounted display (HMD device).

The embodiments according to the present invention have been described above. However, these are examples of the present invention, and various configurations other than the above can be adopted.

In addition, the present invention is not limited to the above-described embodiments, and modifications, improvements, and the like within a range that does not impair the effects of the present invention are included in the present invention. Examples

Hereinafter, the present embodiment will be described in detail with reference to Examples and the like. The present embodiment is not limited to the description of these examples.

First, the materials used in each example are shown.

### · Polymerizable compound: (meth)acrylate monomer (A)

Monofunctional (meth)acrylate monomer (A1): GM81HDA (dicyclopentanyl methacrylate, manufactured by Qualipoly Chemical Corporation)
Bifunctional or higher functional (meth)acrylate monomer (A2)1: DDD (1,12-dodecanediol dimethacrylate, manufactured by Shin-Nakamura Chemical Co., Ltd.)
Bifunctional or higher functional (meth)acrylate monomer (A2)2: DCP (tricyclodecane dimethanol dimethacrylate, manufactured by Shin-Nakamura Chemical Co., Ltd.)
Bifunctional or higher functional (meth)acrylate monomer (A2)3: A-DCP (tricyclodecane dimethanol diacrylate, manufactured by Shin-Nakamura Chemical Co., Ltd.)

### · Antioxidant (B)

Antioxidant 1: Thioether-based antioxidant (bis[3-(dodecylthio)propionic acid]2,2-bis[[3-(dodecylthio)-1-oxopropyloxy]methyl]-1,3-propanediyl, manufactured by ADEKA Corporation, product name: ADEKA STAB AO-412S) (hereinafter, also referred to as AO-412S)
Antioxidant 2: phenol-based antioxidant (pentaerythritol tetrakis[3-(3,5-di-tert-butyl-4-hydroxyphenyl)propionate], manufactured by ADEKA Corporation, product name: ADEKA STAB AO-60) (hereinafter, also referred to as AO-60)

### · Photopolymerization initiator (C)

Photopolymerization initiator 1: photoradical polymerization initiator (1-hydroxycyclohexyl phenyl ketone, manufactured by IGM Resins B.V., product name: Omnirad 184)
Photopolymerization initiator 2: photoradical polymerization initiator (2,4,6-trimethylbenzoyldiphenylphosphine oxide, manufactured by IGM Resins B.V., product name: Omnirad TPO H)

### · Light stabilizer (D)

Light stabilizer 1: hindered amine-based light stabilizer (methacrylic acid 1,2,2,6,6-pentamethyl-4-piperidyl, manufactured by ADEKA Corporation, product name: ADEKA STAB LA-82) (hereinafter, also referred to as LA-82)

### (Examples 1 to 5 and Comparative Examples 1 to 4)

Each component was blended to have the blending composition shown in Table 1, thereby obtaining a liquid photocurable resin composition. The unit of the blending composition in Table 1 is parts by mass.

Physical properties of the photocurable resin composition or the cured product thereof obtained in each example were measured by the following methods. The measurement results are shown in Table 1.

### <Measurement of absorbance at 405 nm>

Using the photocurable resin composition of each example, an absorbance A₄₀₅ at a wavelength of 405 nm was measured according to the following <Measurement method>.

### <Measurement method>

A sample was prepared by mixing the photocurable resin composition and isopropanol (manufactured by Tokyo Chemical Industry Co., Ltd., product name: Isopropyl Alcohol) at a mass ratio of the photocurable resin composition to isopropanol of 7:93, thereby dissolving the photocurable resin composition in the isopropanol. Next, the sample was placed in a sample cell (material: ES quartz glass, optical path length: 10 mm, optical path width: 10 mm, type: two-side transparent, product name: standard quartz cell for spectrophotometer (two-side transparent)) having an optical path length of 10 mm. According to the following <absorbance measurement conditions>, light having a wavelength of 405 nm and an incident light intensity I₀ was incident on the sample cell, and a transmitted light intensity I of the light transmitted through the sample cell was measured. Then, the absorbance A₄₀₅ at a wavelength of 405 nm was calculated by the following expression (4). (4): ${A}_{405} = - {log}_{10} \left(I/{I}_{0}\right)$

### <Absorbance measurement conditions>

Measuring device: ultraviolet-visible-near infrared spectrophotometer (manufactured by JASCO Corporation, product name: V770)
Measurement method: transmission method
Measurement wavelength: 405 nm
Reference: isopropanol (manufactured by Tokyo Chemical Industry Co., Ltd., product name: Isopropyl Alcohol)
Detector: photomultiplier tube, cooled PbS photoconductive element

### <Evaluation of surface unevenness>

An optical molded body was prepared according to the following <preparation conditions of optical molded body> using the photocurable resin composition of each example. The surface unevenness of the prepared optical molded body was evaluated according to the following <Evaluation method>.

### <Preparation conditions of optical molded body>

A silicone sheet (material: silicone rubber, hardness: 50 degrees) having a thickness of 3.0 mm and a size of 50 mm × 50 mm, in which a circular hole having a diameter of 35 mmφ was formed, was placed on a SUS304 substrate (product name: SUS304-BA, manufactured by Standard Testpiece Co., Ltd.) having a thickness of 2.0 mm and a size of 50 mm × 50 mm, in which one surface was mirror-finished. The circular hole portion of the silicone sheet was filled with the photocurable resin composition, and then a 0.7 mm-thick alkali-free glass (product name: JIS R 3202, glass plate surface, manufactured by Testpiece Co., Ltd.) having a size of 50 mm × 50 mm was further placed thereon. At this time, it was confirmed that no air bubbles were present. Hereinafter, a laminate in which a silicone sheet is placed on the above-described SUS304 substrate, the circular hole portion of the silicone sheet is filled with a photocurable resin composition, and then an alkali-free glass is further placed thereon may be referred to as a laminate.

The obtained laminate was placed on an SUS-made lab jack to adjust the height, and using an LED light irradiation device (manufactured by CCS, Inc., product name: 405 nm-120 mm air-cooled batch type irradiation device, model number: HLDL-120505-NWPS), the photocurable resin composition was irradiated with LED light having a wavelength of 405 nm for 1 minute under a condition of 110 mW from above the alkali-free glass. After 30 seconds from the irradiation with the LED light, the photocurable resin composition was irradiated with the LED light having a wavelength of 405 nm for 2 minutes under a condition of 810 mW. After the irradiation with LED light, the laminate was allowed to cool at 23°C for 30 minutes. After the cooling, the cured product of the photocurable resin composition was released from the SUS304 substrate, the silicone sheet, and the alkali-free glass to obtain an optical molded body.

The illuminance of the LED light was measured using a 405 nm illuminance meter (manufactured by Ushio Inc., product name: UIT150).

### <Evaluation method>

An alkali-free glass (manufactured by Testpiece Co., Ltd., JIS R 3202 (glass plate) surface) having a thickness of 2 mm and a size of 100 mm × 100 mm was placed on white paper (manufactured by Tanomaru Co., Ltd., TANOSEE PPC Paper Type FW A4 PPCFW-A4). Furthermore, the prepared optical molded body was placed on the alkali-free glass. In this state, the optical molded body was observed under irradiation with a white LED having an irradiation intensity of 300 lux or more and 500 lux or less. Specifically, a pattern projected onto the white paper, which was caused by the surface unevenness of the optical molded body, was observed.

The proportion of the pattern projected onto the white paper, which was caused by the surface unevenness of the optical molded body, to the surface of the optical molded body in contact with the SUS304 substrate was defined as a proportion R. A case where the proportion R was 0% or more and less than 2% was evaluated as A, a case where the proportion R was 2% or more and less than 20% was evaluated as B, and a case where the proportion R was 20% or more and 100% or less was evaluated as C.

### [Table 1]

**Table 1**

| | | | | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|---|---|---|
| Blending composition | (meth) acrylate monomer | Monofunctional | Alicyclic | Methacrylate | GM81HDA | 0 | 80 | 80 | 80 | 80 | 80 | 80 | 0 | 80 |
| | | Bifunctional or higher functional | Linear | Methacrylate | DDD | 0 | 20 | 20 | 20 | 20 | 20 | 0 | 0 | 20 |
| | | | Alicyclic | Methacrylate | DCP | 100 | 0 | 0 | 0 | 0 | 0 | 0 | 100 | 0 |
| | | | Alicyclic | Acrylate | A-DCP | 0 | 0 | 0 | 0 | 0 | 0 | 20 | 0 | 0 |
| | Antioxidant | | | | AO-412S | 0.50 | 0.50 | 0.50 | 0.50 | 0.50 | 0.50 | 0.50 | 0.50 | 0.50 |
| | | | | | AO-60 | 0.50 | 0.50 | 0.50 | 0.50 | 0.50 | 0.50 | 0.50 | 0.50 | 0.50 |
| | Photopolymerization initiator | | | | Omnirad 184 | 4.0 | 4.0 | 3.5 | 4.0 | 3.0 | 4.0 | 4.0 | 4.0 | 0.0 |
| | | | | | Omnirad TPO H | 0.0 | 0.0 | 0.5 | 0.5 | 1.0 | 1.0 | 1.0 | 1.0 | 4.0 |
| | Light stabilizer | | | | LA-82 | 0.10 | 0.10 | 0.10 | 0.10 | 0.10 | 0.10 | 0.10 | 0.10 | 0.10 |
| Physical property | Absorbance at 405 nm | | | | | 0.024 | 0.024 | 0.103 | 0.186 | 0.248 | 0.322 | 0.322 | 0.322 | 1.100 |
| | Surface unevenness | | | | | A | A | A | A | B | c | C | C | c |

Priority is claimed on Japanese Patent Application No. 2024-012816, filed January 31, 2024, the entire disclosure of which is incorporated herein by reference.

## Claims

1. A photocurable resin composition capable of being used for an optical molded body,
wherein an absorbance A₄₀₅ of the photocurable resin composition at a wavelength of 405 nm, which is measured according to the following <measurement method>, is 0.300 or less.
<Measurement method>
A sample is prepared by dissolving the photocurable resin composition in isopropanol at a mass ratio of the photocurable resin composition to isopropanol of 7:93, and then the sample is placed in a sample cell having an optical path length of 10 mm. When an incident light intensity I₀ at a wavelength of 405 nm is incident on the sample cell, a transmitted light intensity I transmitted through the sample cell is measured, and an absorbance A₄₀₅ at a wavelength of 405 nm is calculated by the following expression (1). (1): ${A}_{405} = - {log}_{10} \left(I/{I}_{0}\right)$

2. The photocurable resin composition according to Claim 1,
wherein the absorbance A₄₀₅ is 0.010 or more.

3. The photocurable resin composition according to Claim 1 or 2,
wherein the photocurable resin composition contains a (meth)acrylate monomer.

4. The photocurable resin composition according to Claim **3,**
wherein the (meth)acrylate monomer includes one or two or more selected from the group consisting of a monofunctional (meth)acrylate monomer and a bifunctional or higher functional (meth)acrylate monomer.

5. The photocurable resin composition according to Claim 3 or **4,**
wherein the (meth)acrylate monomer includes a (meth)acrylate monomer having an alicyclic skeleton.

6. The photocurable resin composition according to Claim **5,**
wherein the (meth)acrylate monomer having an alicyclic skeleton has one or two or more skeletons selected from the group consisting of an adamantane skeleton, a norbornane skeleton, and a dicyclopentadiene skeleton.

7. The photocurable resin composition according to Claim 5 or 6,
wherein a content of the (meth)acrylate monomer having an alicyclic skeleton is 30 parts by mass or more and 100 parts by mass or less in a case where a total content of the (meth)acrylate monomer is defined as 100 parts by mass.

8. The photocurable resin composition according to any one of Claims 3 to 7,
wherein the (meth)acrylate monomer includes a (meth)acrylate monomer having a linear hydrocarbon skeleton.

9. The photocurable resin composition according to any one of Claims 1 to 8,
wherein the photocurable resin composition further contains a photopolymerization initiator.

10. The photocurable resin composition according to Claim 9,
wherein the photopolymerization initiator includes a photoradical polymerization initiator.

11. The photocurable resin composition according to Claim 9 or 10,
wherein a content of the photopolymerization initiator is 0.10 parts by mass or more and 10 parts by mass or less in a case where a total content of the (meth)acrylate monomer is set to 100 parts by mass.

12. The photocurable resin composition according to any one of Claims 1 to 11,
wherein the photocurable resin composition further contains an antioxidant.

13. The photocurable resin composition according to Claim 12,
wherein a content of the antioxidant is 0.010 parts by mass or more and 10 parts by mass or less in a case where a total content of the (meth)acrylate monomer is set to 100 parts by mass.

14. The photocurable resin composition according to any one of Claims 1 to 13,
wherein the photocurable resin composition further contains a light stabilizer.

15. The photocurable resin composition according to Claim 14,
wherein a content of the light stabilizer is 0.010 parts by mass or more and 5 parts by mass or less in a case where a total content of the (meth)acrylate monomer is set to 100 parts by mass.

16. The photocurable resin composition according to any one of Claims 1 to 15,
wherein a content of the (meth)acrylate monomer is 80% by mass or more and less than 100% by mass in a case where a total content of the photocurable resin composition is set to 100% by mass.

17. The photocurable resin composition according to any one of Claims 1 to 16,
wherein the photocurable resin composition is capable of being used in a casting method.

18. An optical molded body comprising a cured product of the photocurable resin composition according to any one of Claims 1 to 17.

19. The optical molded body according to Claim 18,
wherein the optical molded body includes a lens.

20. The optical molded body according to Claim 19,
wherein the lens includes one or two or more selected from the group consisting of a lens for a virtual reality device (VR lens), a lens for a mixed reality device (MR lens), a lens for an augmented reality device (AR lens), a lens for a cross-reality device (xR lens), and a lens for a head-mounted display (HMD lens).

21. The optical molded body according to any one of Claims 18 to 20,
wherein a maximum thickness portion is 20.0 mm or less.

22. The optical molded body according to any one of Claims 18 to 21,
wherein a maximum thickness portion of the optical molded body is 1.0 mm or more.

23. An optical device comprising the optical molded body according to any one of Claims 18 to 22.

24. A method of manufacturing an optical molded body, comprising:
a thickening step of increasing a viscosity of a photocurable resin composition by irradiating the photocurable resin composition with light using an irradiation device having a light source peak at a wavelength of 360 nm or more and 410 nm or less; and
a curing step of curing the photocurable resin composition by irradiating the photocurable resin composition with light using the irradiation device having a light source peak at a wavelength of 360 nm or more and 410 nm or less after the thickening step.

25. The method of manufacturing an optical molded body according to Claim 24, further comprising:
an upper mold installation step of installing an upper mold for molding on the photocurable resin composition after the thickening step and before the curing step.

26. The method of manufacturing an optical molded body according to Claim 24 or 25, further comprising:
a coating step of coating a lower mold for molding with the photocurable resin composition,
wherein the thickening step is performed after the coating step.

27. The method of manufacturing an optical molded body according to any one of Claims 24 to 26,
wherein the thickening step includes a step of irradiating the photocurable resin composition with light using an irradiation device having a light source peak at a wavelength of 360 nm or more and 410 nm or less at an irradiation intensity of 90 mW or more and 130 mW or less.

28. The method of manufacturing an optical molded body according to any one of Claims 24 to 27,
wherein the thickening step includes a step of irradiating the photocurable resin composition with light using an irradiation device having a light source peak at a wavelength of 360 nm or more and 410 nm or less for an irradiation time of 1 second or more and 300 seconds or less.

29. The method of manufacturing an optical molded body according to any one of Claims 24 to 28,
wherein the thickening step includes a step of irradiating the photocurable resin composition with light using an irradiation device having a light source peak at a wavelength of 360 nm or more and 410 nm or less at an integrated light quantity of 50 mJ or more and 20.0 J or less.

30. The method of manufacturing an optical molded body according to any one of Claims 24 to 29,
wherein in the thickening step, a thickness of the photocurable resin composition is 15.0 mm or less.

31. The method of manufacturing an optical molded body according to any one of Claims 24 to 30,
wherein the photocurable resin composition includes the photocurable resin composition according to any one of Claims 1 to 17.
